(19) Europäisches Patentamt

European Patent Office

Office européen des brevets

(11) Veröffentlichungsnummer : **0 127 731**
**B1**

(12) **EUROPÄISCHE PATENTSCHRIFT**

(45) Veröffentlichungstag der Patentschrift :
10.09.86

(21) Anmeldenummer : 84102476.3

(22) Anmeldetag : 08.03.84

(51) Int. Cl.⁴ : **C 03 C 8/20, C 03 C 3/04**

(54) Metalleffektglasuren für keramische Unterlagen.

(30) Priorität : 06.05.83 DE 3316596

(43) Veröffentlichungstag der Anmeldung :
12.12.84 Patentblatt 84/50

(45) Bekanntmachung des Hinweises auf die Patenterteilung : 10.09.86 Patentblatt 86/37

(84) Benannte Vertragsstaaten :
DE FR GB IT

(56) Entgegenhaltungen :
DE-B- 2 413 239

(73) Patentinhaber : Degussa Aktiengesellschaft
Weissfrauenstrasse 9
D-6000 Frankfurt am Main 1 (DE)

(72) Erfinder : Menschner, Rolf
Offenbacher Landstrasse 357a
D-6000 Frankfurt 70 (DE)
Erfinder : Fischer, Robert, Dr.
Haydnstrasse 8
D-6053 Obertshausen (DE)

EP 0 127 731 B1

**0 127 731**

**Beschreibung**

Die Erfindung betrifft Metalleffektglasuren für keramische Unterlagen, bestehend aus 75 bis 95 % Grundglasur und 5-25 % Farbkörper.

Seit tausenden von Jahren werden keramische Oberflächen mit Glasuren geschmückt und geschützt. Die Mode und der technische Fortschritt bewirken eine ständige Anpassung der Glasuren an Verbrauchergewohnheiten. So beruht auch die Imitation von Metalloberflächen im keramischen Bereich letztlich auf dem Bestreben, Vorteile der Keramik mit dem Aussehen von Metall zu verknüpfen.

Auf diesem Gebiet der sogenannten Metalleffektglasuren sind Eisenoxid-haltige Glasuren unter dem Namen « Aventurin »-Gläser bzw. -Glasuren bekannt. Die Farbe wird dabei durch Hämatitplättchen erzeugt, um Kupfer zu imitieren. Die Variationsmöglichkeiten für andere Farbtöne sind allerdings sehr gering.

Es war daher Aufgabe der vorliegenden Erfindung, Metalleffektglasuren für keramische Unterlagen zu entwickeln, bestehend aus 75-95 % Grundglasur und 5-25 % Farbkörper, die es gestatten, Metalleffekte mit breitem Farbenspiel zu imitieren, die auch für Schnellbrandbedingungen im Steingut- und Steinzeugbereich einsetzbar sind.

Diese Aufgabe wurde erfindungsgemäß dadurch gelöst, daß die Grundglasur die Zusammensetzung 20-55 % PbO ; 0,1-10 % Na$_2$O ; 1-15 % CaO ; 1-18 % Al$_2$O$_3$ und 8-75,9 % SiO$_2$ aufweist und der Farbkörper aus Oxiden der Zusammensetzung 30-80 % MnO$_2$ ; 1-20 % CuO ; 0,01-50 % TiO$_2$ und 0,01-20 % NiO besteht.

Der Farbkörper kann hierbei aus einem losen Gemisch der Oxide oder aus einem zusammengesinterten Oxidgemisch bestehen. Vorzugsweise verwendet man 88-92 % einer Grundglasur die 23,9-51,7 % PbO ; 0,2-5,6 % Na$_2$O ; 3,8-9,8 % CaO und 4,0-17,0 % Al$_2$O$_3$ aufweist und setzt dieser 8-12 % Farbkörper der Zusammensetzung 50-72 % MnO$_2$ ; 2-10 % CuO ; 16-40 % TiO$_2$ und 5-10 % NiO zu.

Grundglasuren mit diesen Zusammensetzungen sind — wie allgemein üblich — aus Fritten und Rohstoffen zusammengesetzt. Die Menge und Art einzelner Komponenten bestimmen einerseits das Aussehen der Glasuroberfläche und andererseits die Brenntemperatur. Niedrige Brenntemperaturen erfordern mehr PbO, das bei höheren Brenntemperaturen durch Alkali-Aluminiumsilikat ersetzt werden kann.

Anstelle von CaO kann auch ganz oder teilweise BaO oder SrO zur Variation der Glasuroberfläche zugesetzt werden. Mit einer Erhöhung des Al$_2$O$_3$-Gehaltes erzielt man eine Mattierung der Oberfläche.

Der Farbkörper zur Entwicklung des Metalleffektes ist eine Mischung aus vier Oxiden, nämlich CuO, MnO$_2$, TiO$_2$ und NiO. Die Menge jeder einzelnen Komponente muß dabei im bestimmten Verhältnis zueinander und zur Grundglasur stehen.

Durch Variation der Verhältnisse der angegebenen Oxide zueinander verändert man die Farbe der Glasur.

| Farbe | MnO$_2$ | TiO$_2$ | CuO | NiO |
|---|---|---|---|---|
| blaugold | 72 | 16 | 2 | 10 |
| rotgold | 68 | 16 | 6 | 10 |
| gelbgold | 60 | 20 | 10 | 10 |
| platin | 50 | 40 | 5 | 5 |

Selbstverständlich können diese Verhältnisse zur Erzielung von Nuancen weiter variiert werden. Es ist ebenfalls möglich noch andere Metalloxide, wie z. B. Fe$_2$O$_3$, MoO$_3$, Bi$_2$O$_3$, Sb$_2$O$_3$, CoO, V$_2$O$_5$, ZrO$_2$, Cr$_2$O$_3$, zur Veränderung des Glasur-Charakters zuzugeben.

Die erfindungsgemäßen Metalleffektglasuren können mit verschiedenen Applikationstechniken aufgetragen werden, wie z. B. Aufspritzen, Aufgießen und Siebdrucken.

Die Brenntemperaturen liegen zwischen 950 und 1 300 °C je nach Zusammensetzung des Grundglases. Für niedere Temperaturen ist z. B. mehr Fritte nötig, die bei höheren Brenntemperaturen durch keramische Rohstoffe im angegebenen Versatz ersetzt werden kann. Der bevorzugte Brennbereich liegt zwischen 1 020 und 1 280 °C.

Der Glasurbrand kann sowohl als Langzeit- als auch als Schnellbrand in neutraler bis oxidierender Atmosphäre vorgenommen werden.

**Patentansprüche**

1. Metalleffektglasuren für keramische Unterlagen, bestehend aus 75-95 % Grundglasur und 5-25 % Farbkörper, dadurch gekennzeichnet, daß die Grundglasur die Zusammensetzung 20-55 % PbO ; 0,1-10 %

2

$Na_2O$ ; 1-15 % CaO ; 1-18 % $Al_2O_3$ und 8-75,9 % $SiO_2$ aufweist und der Farbkörper aus Oxiden der Zusammensetzung 30-80 % $MnO_2$ ; 1-20 % CuO ; 0,01-50 % $TiO_2$ und 0,01-20 % NiO besteht.

2. Metalleffektglasuren nach Anspruch 1, bestehend aus 88-92 % Grundglasur und 8-12 % Farbkörper, dadurch gekennzeichnet, daß die Grundglasur 23,9-51,7 % PbO ; 0,2-5,6 % $Na_2O$ ; 3,8-9,8 % CaO und 4,0-17,0 % $Al_2O_3$ aufweist und der Farbkörper aus den Oxiden der Zusammensetzung 50-72 % $MnO_2$ ; 2-10 % CuO ; 16-40 % $TiO_2$ und 5-10 % NiO besteht.

3. Metalleffektglasuren nach den Ansprüchen 1 und 2, dadurch gekennzeichnet, daß der Brennbereich zwischen 950 und 1 300 °C liegt.

4. Metalleffektglasuren nach den Ansprüchen 1-3, dadurch gekennzeichnet, daß der Brennbereich zwischen 1 020 und 1 280 °C liegt.

## Claims

1. Metal effect glazes for ceramic substrates, composed of from 75 to 95 % of base glaze and from 5 to 25 % of pigment, characterized in that the base glaze has the composition 20-55 % PbO ; 0.1-10 % $Na_2O$ ; 1-15 % CaO ; 1-18 % $Al_2O_3$ and 8-75.9 % $SiO_2$ and the pigment is composed of oxides having the composition 30-80 % $MnO_2$ ; 1-20 % CuO ; 0.01-50 % $TiO_2$ and 0.01-20 % NiO.

2. Metal effect glazes according to claim 1, composed of from 88 to 92 % of base glaze and from 8 to 12 % of pigment, characterized in that the base glaze contains 23.9-51.7 % PbO . 0.2-5.6 % $Na_2O$ ; 3.8-9.8 % CaO and 4.0-17.0 % $Al_2O_3$ and the pigment is composed of the oxides having the composition 50-72 % $MnO_2$ ; 2-10 % CuO ; 16-40 % $TiO_2$ and 5-10 % NiO.

3. Metal effect glazes according to claims 1 and 2, characterized in that the firing range lies between 950 and 1 300 °C.

4. Metal effect glazes according to claims 1-3, characterized in that the firing range lies between 1 020 and 1 280 °C.

## Revendications

1. Glaçures donnant un effet métallique pour supports céramiques, constituées de 75 à 95 % d'une glaçure de base et 5 à 25 % d'un corps colorant, caractérisées en ce que la glaçure de base présente la composition suivante, 20 à 55 % PbO, 0,1 à 10 % $Na_2O$, 1 à 15 % CaO, 1 à 18 % $Al_2O_3$ et 8 à 75,9 % $SiO_2$ et que le corps colorant est constitué d'oxydes ayant la composition suivante : 30 à 80 % $MnO_2$, 1 à 20 % CuO, 0,01 à 50 % $TiO_2$ et 0,01 à 20 % NiO.

2. Glaçures donnant un effet métallique suivant la revendication 1, constituées de 88 à 92 % de glaçure de base et 8 à 12 % de corps colorant, caractérisées en ce que la glaçure de base comporte 23,9 à 51,7 % PbO, 0,2 à 5,6 % $Na_2O$, 3,8 à 9,8 % CaO et 4 à 17 % $Al_2O_3$ et que le corps colorant est constitué d'oxydes contenant 50 à 72 % $MnO_2$, 2 à 10 % CuO, 16 à 40 % $TiO_2$ et 5 à 10 % NiO.

3. Glaçures donnant des effets métalliques suivant les revendications 1 et 2, caractérisées en ce que la plage de températures de cuisson se situe entre 950 et 1 300 °C.

4. Glaçures donnant un effet métallique suivant les revendications 1 à 3, caractérisées en ce que la plage de températures de cuisson se situe entre 1 020 et 1 280 °C.